# EUROPEAN PATENT SPECIFICATION

(11) **EP 1 648 127 B1**
(45) Date of publication and mention of the grant of the patent: **23.01.2008**
(21) Application number: 05255587.7
(22) Date of filing: 13.09.2005
(51) Int. Cl.: H04L 12/64

(54) **Method and apparatus for transmitting isochronous stream**
Verfahren und Vorrichtung zur Übertragung von isochronen Datenströmen
Procédé et appareil pour transmettre un flux de données isochrone

(30) Priority: 15.10.2004 KR 2004082567
(43) Date of publication of application: 19.04.2006
(73) Proprietor: Samsung Electronics Co., Ltd., Suwon-si, Gyeonggi-Do (KR)
(72) Inventor: Jin, Ho, Yongin-si Gyeonggi-do (KR)
(74) Representative: Waddington, Richard

(56) References cited:
- US-A- 5 991 520
- US-B1- 6 701 371
- TAKESHI SAITO YOSHIAKI TAKABATAKE MIKIO HASHIMOTO TOSHIBA R&D CENTER: "An Extension of MCAP for Data Transmission on IEEE1394 Isochronous Channel" IETF STANDARD-WORKING-DRAFT, INTERNET ENGINEERING TASK FORCE, IETF, CH, February 1999 (1999-02), XP015034861 ISSN: 0000-0004

## Description

The present invention relates to a method and apparatus for transmitting an isochronous stream, and more particularly, to a method and apparatus for transmitting an isochronous stream according to an Internet protocol (IP) over an Institute of Electrical and Electronics Engineers (IEEE) 1394.

The IEEE 1394 protocol is widely used for multimedia devices such as video camcorders which require high-speed transmission of mass storage data because IEEE 1394 supports faster transmission speeds than other conventional standards. In particular, since IEEE 1394 supports real-time isochronous stream transmission, IEEE 1394 is commonly used for home digital devices and is emerging as a substitute for a backbone of a home network due to its expandability and capacity for high-speed transmission.

As electric home appliances have become digitalized, compatibility between information technology (IT) devices and electric home appliances has been actively studied and data transmission using an IP is considered to be a more efficient communication method in a hybrid network of a home. Accordingly, the Internet Engineering Task Force (IETF) proposed IP over IEEE 1394 in RFC 2734. IP over IEEE 1394 defines the IEEE 1394 standard using IP services such as a Quality of Service (QOS) guarantee.

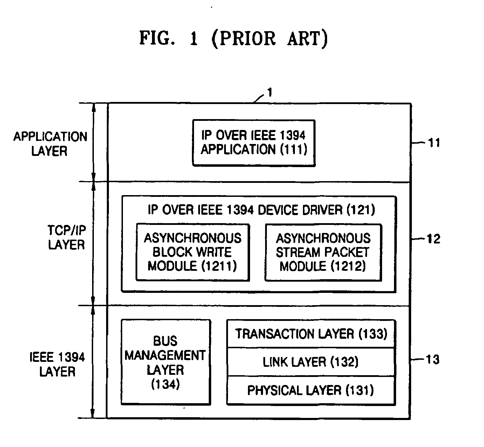

FIG. 1 is a configuration diagram of a conventional IP over IEEE 1394 protocol stack.

Referring to FIG. 1, the conventional IP over IEEE 1394 protocol stack includes an application layer 11, a TCP/IP layer 12, and an IEEE 1394 layer 13.

The application layer 11 contains an IP over IEEE 1394 application 111.

The TCP/IP layer 12 includes an IP over IEEE 1394 device driver 121, and the IP over IEEE 1394 device driver 121 contains an asynchronous block write-module 1211 and an asynchronous stream module 1212.

The IEEE 1394 layer 13 includes a physical layer 131, a link layer 132, a transaction layer 133, and a bus management layer 134.

Although the conventional IEEE 1394 standard supports both asynchronous stream transmission and isochronous stream transmission, as shown in FIG. 1, the conventional IP over IEEE 1394 supports only asynchronous block write or asynchronous stream packet transmission. That is, since the conventional IEEE 1394 standard defines only isochronous stream packet transmission which is not based on an IP but is instead based on a time division and given that the conventional IP over IEEE 1394 defines only the asynchronous block write or asynchronous stream packet transmission, packets such as moving picture experts group (MPEG) 2 packets which require a QOS guarantee and real-time transmission cannot be transmitted in real-time with the QOS being guaranteed.

Takeshi Saito Yoshiaki Takabatake Mikio Hashimoto Toshiba R&D Center: "An Extension of MCAP for Data Transmission on IEEE1394 Isochronous Channel" IETF Standard-working-draft, Internet Engineering Task Force, IETF,CH, February 1999 (1999-02), XP015034861 ISSN: 0000-0004 discloses a method of transmitting an isochronous stream using an internet protocol.

The present invention provides a method and apparatus allowing IP over IEEE 1394 to support isochronous stream transmission.

The present invention also provides a computer readable recording medium having embodied thereon a computer program for executing the method.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a configuration diagram of a conventional IP over IEEE 1394 protocol stack;
FIG. 2 is a block diagram of an isochronous stream transmission/receipt system according to an exemplary embodiment of the present invention;
FIG. 3 illustrates a cycle configuration according to the IEEE 1394 standard;
FIG. 4 illustrates a format of an isochronous stream packet according to an exemplary embodiment of the present invention;
FIG. 5 illustrates in detail the format of the isochronous stream packet illustrated in FIG. 4;
FIG. 6 is a diagram for explaining packet management of the isochronous stream packet module illustrated in FIG. 2;
FIGS. 7 and 8 are flowcharts illustrating a method of transmitting and receiving an isochronous stream according to an exemplary embodiment of the present invention;
FIG. 9 is a flowchart illustrating in detail operation 87 illustrated FIG. 8; and
FIG. 10 is a flowchart illustrating in detail operation 76 illustrated in FIG. 8.

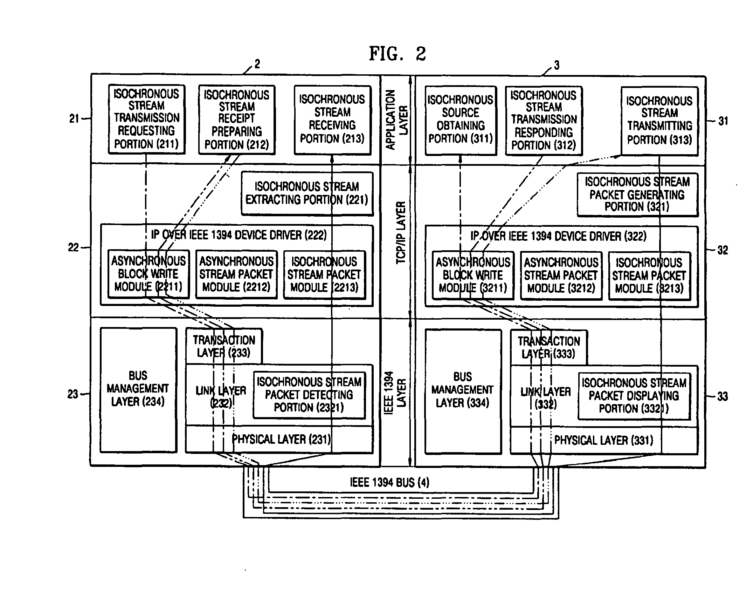

Referring to FIG. 2, an isochronous stream receiving device mounted on a first node 2 according to the present invention includes an application layer 21, a TCP/IP layer 22, and an IEEE 1394 layer 23.

When the present embodiment is implemented in practice, it will be understood by those of ordinary skill in the art that besides the layers illustrated in FIG. 2, other layers can be further included in the protocol stack or some layers can be substituted with other layers. For instance, a session layer can be further included, or the TCP layer can be substituted with a User Datagram Protocol (UDP) layer. In addition, when the present embodiment is implemented in practice, it will be also understood by those of ordinary skill in the art that besides the elements illustrated in FIG. 2, other elements can be further included. For example, the TCP/IP layers 22 and 32 can further include elements defined by RFC 2734 corresponding to the IPv4 over IEEE 1394 standard, and the IEEE 1394 layers 23 and 33 can further include elements defined by the IEEE 1394 standard.

The application layer 21 includes an isochronous stream transmission requesting portion 211, an isochronous stream receipt preparing portion 212, and an isochronous stream receiving portion 213.

The isochronous stream transmission requesting portion 211 requests a second node 3 to transmit an isochronous stream over the IEEE 1394 bus, using asynchronous block write by calling an asynchronous block write function in the application layer 21.

The IEEE 1394 standard supports various transfer modes such as the asynchronous block write, an asynchronous stream, an isochronous stream, etc. In particular, commands such as IP datagram, address resolution protocol (ARP) request/response, multicast channel allocation protocol (MCAP) advertisement/solicitation, and the like, are transmitted using an asynchronous block write mode. Therefore, the isochronous stream transmission requesting portion 211 requests the second node 3 to transmit the isochronous stream using the asynchronous block write.

The isochronous stream receipt preparing portion 212 receives a response to the isochronous stream transmission request from the second node 3, and prepares to receive the isochronous stream with reference to a channel and bandwidth included in the received response. More specifically, the isochronous stream receipt preparing portion 212 prepares to receive the isochronous stream by calling an input output control (IOCTL) in the application layer. The IOCTL, which is one of a Linux command, is a function which manipulates parameters of lower layers. That is, the isochronous stream receipt preparing portion 212 sets values of registers of the IEEE 1394 layer that are related to preparation for isochronous stream receipt and prepares to receive the isochronous stream by calling the IOCTL. Further, when the preparation for asynchronous stream receipt has been completed, the isochronous stream receipt preparing portion 212 informs the second node 3 that the isochronous stream receipt preparing portion 212 has prepared to receive the isochronous stream over the IEEE 1394 bus 4 using the asynchronous block write by calling an asynchronous block write function in the application layer.

The isochronous stream receiving portion 213 receives the isochronous stream, using a service of the IP, over the IEEE 1394 bus 4 from the second node 3 which is informed by the isochronous stream receipt preparing portion 212. More specifically, the isochronous stream receiving portion 213 can receive the isochronous stream over the IEEE 1394 bus 4 while the QOS is guaranteed using a service such as packet routing through an optimized path provided by the IP. A typical example of an isochronous stream is a moving picture content stream which needs to be transmitted in real time.

The TCP/IP layer 22 includes an isochronous stream extracting portion 221 and an IP over IEEE 1394 device driver 222.

The isochronous stream extracting portion 221 extracts an isochronous stream from isochronous stream packets output from an isochronous stream packet module 2213. More specifically, the isochronous stream extracting portion 221 removes headers from the isochronous stream packets, and generates the isochronous stream by collecting data stored in payloads of the isochronous stream packets.

The IP over IEEE 1394 device driver 222 includes an asynchronous block write module 2211, an asynchronous stream packet module 2212, and the isochronous stream packet module 2213.

The asynchronous block write module 2211 supports the asynchronous block write which is based on an IP, the asynchronous stream packet module 2212 supports asynchronous stream packet transmission/receipt which is based on an IP, and the isochronous stream packet module 2213 supports isochronous stream packet transmission/receipt which is based on an IP.

The IEEE 1394 layer 23 includes a physical layer 231, a link layer 232, a transaction layer 233 and a bus management layer 234 which corresponds to the IEEE 1394 device driver.

The physical layer 231 physically and electrically connects the IEEE 1394 layer and the IEEE 1394 bus.

The link layer 232 has two queues for transmission and a single queue for receipt in order to transmit and receive packets in two transmission modes, that is, an asynchronous transmission mode and an isochronous transmission mode. The two queues for transmission are divided into a queue for asynchronous transmission and a queue for isochronous transmission and used in writing, and the queue for receipt is used in reading. Additionally, the link layer 232 controls a cycle for smooth transmission and receipt.

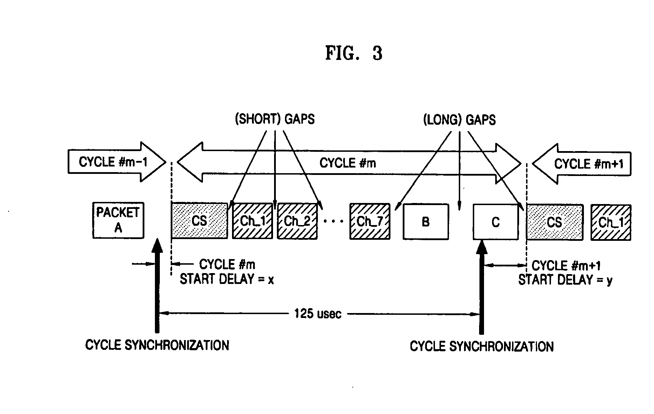

FIG. 3 illustrates a cycle configuration according to the IEEE 1394 standard.

Referring to FIG. 3, a cycle master of the bus management layer 234 transmits a cycle start packet every 125 µsec. Nodes receiving the cycle start packet over the IEEE 1394 bus 4 synchronize the cycle on the basis of the cycle start packet. After the cycle start packet is transmitted, packets are transmitted in the isochronous transmission mode for a predetermined period of time, and packets are transmitted through channel arbitration in the asynchronous transmission mode for a remained period of time.

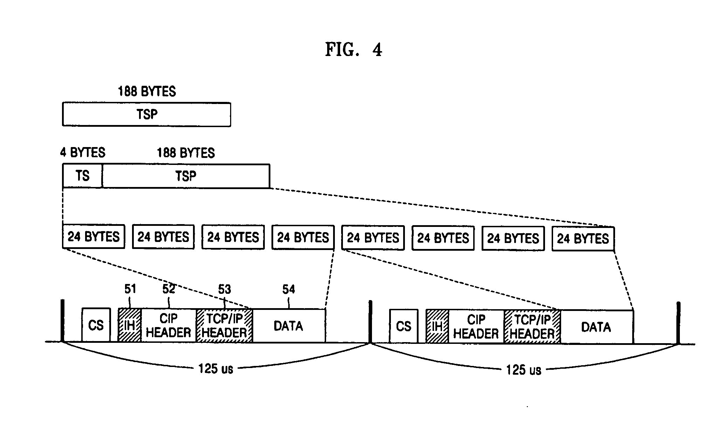

FIG. 4 illustrates a format of an isochronous stream packet according to an exemplary embodiment of the present invention.

Referring FIG. 4, the isochronous stream packet includes an isochronous header 51, a CIP header 52, a TCP/IP header 53, and a data field 54. As shown in FIG. 3, the isochronous stream packet is transmitted after the cycle start packet, which is transmitted every 125 µsec.

The data field 54 is composed of four packets, each of 24 bytes. When a total of eight 24-byte packets, which are stored in data fields of two isochronous stream packets, are collected, an MPEG 2 packet composed of a time stamp (TS) and a transport stream packet (TSP) can be obtained. MPEG 2 is a typical moving picture compression standard.

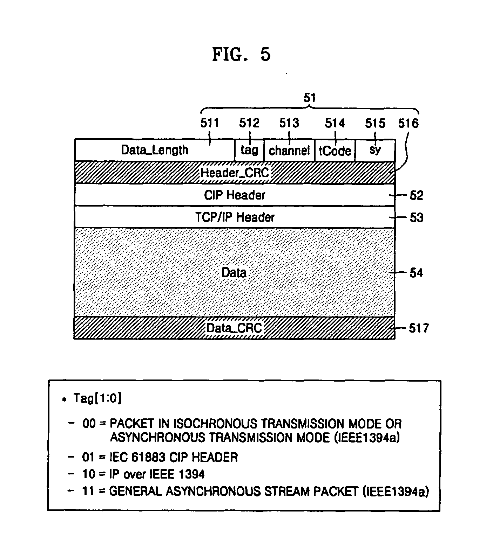

FIG. 5 illustrates in detail the format of the isochronous stream packet illustrated in FIG. 4.

Referring to FIG. 5, an isochronous header 51 of the isochronous stream packet includes a data length field 511, a tag field 512, a channel field 513, a tCode (transaction code) field 514, an sy (synchronization) field 515, and a Header_CRC (cyclic redundancy check) 516. Further, a Data_CRC field 517 is added after the Data field 54.

Referring to FIG. 2 again, the link layer 232 includes an isochronous stream packet detecting portion 2321.

The isochronous stream packet detecting portion 2321 detects the isochronous stream packets in packets input from the physical layer 231 referring to values of the tag field 512 of the isochronous header 51.

A value of 00 in the tag field 512 illustrated in FIG. 5 indicates that a packet is in an isochronous transmission mode or an asynchronous transmission mode according to the conventional IEEE 1394a, and a value of 01 in the tag field 512 indicates an IEC 61883 CIP header. Also, a value of 10 in the tag field 512 indicates the IP over IEEE 1394 according to the present embodiment, and a value of 11 in tag field 512 indicates a general asynchronous stream packet (GASP) according to the conventional IEEE 1394a standard. The isochronous stream packets are input to the isochronous stream packet module 2213 of the IP over IEEE 1394 device driver 222 using the reserved value of 10 in a tag field 512 of the isochronous header 51.

The transaction layer 233 controls the link layer 232 such that reading and writing are performed on a node having a particular address. More specifically, the transaction layer 233 issues a read transaction such that a read can be performed on a node having a particular address. The transaction layer 233 also issues a write transaction such that a write can be performed on the node. Additionally, the transaction layer 233 issues a lock transaction such that updates can be performed until a specific condition is satisfied.

The bus management layer 234 manages the IEEE 1394 bus by controlling the transaction layer 233, the link layer 232 and the physical layer 231. In particular, the bus management layer 234 includes an isochronous resource manager (IRM) which manages a limited channel resource, a bandwidth resource and the like, and the cycle master which controls bus timing.

Referring to FIG. 2 again, the protocol stack of the isochronous stream transmission device mounted on the second node 3 according to the present embodiment is composed of an application layer 31, a TCP/IP layer 32, and an IEEE 1394 layer 33.

The application layer 31 includes an isochronous resource obtaining portion 311, an isochronous stream transmission responding portion 312, and an isochronous stream transmitting portion 313.

When the application layer 31 receives a request for transmission of the isochronous stream over the IEEE 1394 bus 4 using the asynchronous block write, the isochronous resource obtaining portion 311 obtains an isochronous resource for transmission of the isochronous stream. More specifically, the isochronous resource obtaining portion 311 informs the IP over IEEE 1394 device driver 322 in the IP layer 32 of the content type and the maximum packet size of the isochronous stream by calling the IOCTL in the application layer 31. The content type and the maximum packet size of the isochronous stream is used to decide a channel and bandwidth of the isochronous stream that the second node 3 intends to transmit. Afterwards, the isochronous resource obtaining portion 311 is informed of the channel and the bandwidth, which correspond to the isochronous source, as a response to the content type and maximum packet size sent to the IP over IEEE 1394 device driver 322, that is, the return value for the IOCTL call.

In the present invention, the maximum packet size is used as a data rate.

The isochronous stream transmission responding portion 312 transmits a response including information about the channel and the bandwidth, which are results of obtaining the isochronous resource in the isochronous resource obtaining portion 311, to the first node 2 over the IEEE 1394 bus 4 using an asynchronous block write by calling the asynchronous block write function in the application layer 31.

When the isochronous stream transmitting portion 313 is informed by the first node 2, which received the response transmitted from the isochronous stream transmission responding portion 312, that preparation for isochronous stream receipt is completed, the isochronous stream transmitting portion 313 uses the service of IP based on the obtained result in the isochronous resource obtaining portion 311 and transmits the isochronous stream over the IEEE 1394 bus 4 by calling the isochronous stream transmission function in the application layer 31. More specifically, by using a service such as packet routing through an optimized path that the IP provides, the isochronous stream transmitting portion 313 can transmit the isochronous stream over the IEEE 1394 bus 4 with guaranteed QOS.

The TCP/IP layer 32 contains an isochronous stream packet generating portion 321 and an IP over IEEE 1394 device driver 322.

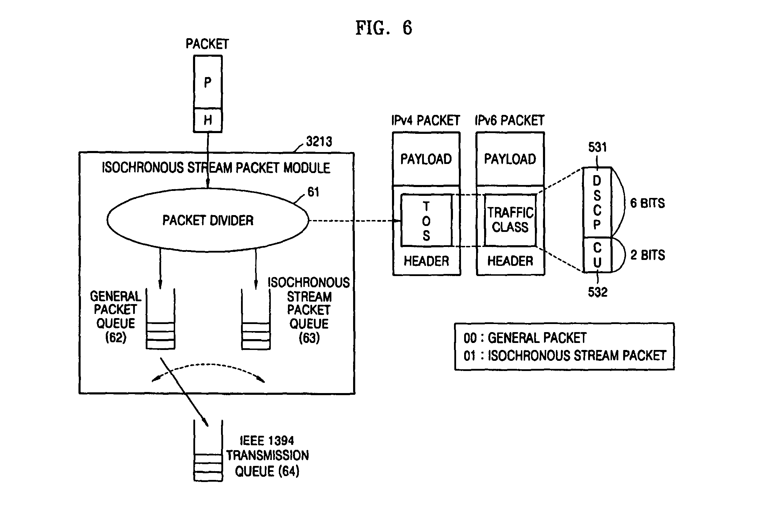

The isochronous stream packet generating portion 321 generates the isochronous stream packets from the isochronous stream in the TCP/IP layer 32 according to an isochronous stream transmission function call of the isochronous stream transmitting portion 313 from the application layer 31. In particular, the isochronous stream packet generating portion 321 records a predetermined value in a type of service (TOS) field of an IPv4 header if the isochronous stream packet is an IPv4 packet, or a predetermined value in a traffic class field of an IPv6 header if the isochronous stream packet is an IPv6 packet so that the isochronous stream packets and the general packets can be managed by different queues in the IP over IEEE 1394 device driver 322. The specific values recorded in the TOS field of the IPv4 header or the traffic class field of the IPv6 header will now be described with reference to FIG. 6.

FIG. 6 is a diagram for explaining packet management of the isochronous stream packet module illustrated in FIG. 2.

Referring to FIG. 6, each of the TOS field of the IPv4 header or the traffic class field of the IPv6 header includes a differentiated service code point (DSCP) field 531 and a currently unused (CU) field 532.

The isochronous stream packet generating portion 321 records a value of 00 in the CU field 532 when the packet output from the application layer 31 is a general packet, and records a value of 01 when the packet output from the application layer 31 is an isochronous stream packet.

The IP over IEEE 1394 device driver 322 includes an asynchronous block write module 3211, an asynchronous stream packet module 3212, and an isochronous stream packet module 3213.

The asynchronous block write module 3211 corresponds to the above-mentioned asynchronous block write module 2211, the asynchronous stream packet module 3212 corresponds to the above-mentioned asynchronous stream packet module 2212, and the isochronous stream packet module 3213 corresponds to the above-mentioned isochronous stream packet module 2213.

The IP over IEEE 1394 device driver 322 is informed of the content type and the maximum packet size of the isochronous stream through the IOCTL call from the application layer 31, and informs an isochronous resource manager in the transaction layer 333 of the content type and the maximum packet size of the isochronous stream. Thereafter, when the IP over IEEE 1394 device driver 322 is assigned the channel and bandwidth by the isochronous resource manager, the IP over IEEE 1394 device driver 322 informs the application layer 31 of the assigned channel and bandwidth. On the other hand, when the IP over IEEE 1394 device driver 322 is not assigned the channel and bandwidth by the isochronous resource manager, the IP over IEEE 1394 device driver 322 informs the application layer 31 that the isochronous stream cannot be transmitted.

Further, the IP over IEEE 1394 device driver 322 registers the assigned channel and bandwidth to an output plug control register (oPCR) and an output master plug register (oMPR) of the second node 3 and to an input plug control register (iPCR) of the first node 2 and an input master plug register (iMPR) through an asynchronous lock transaction, and generates an isochronous channel for transmitting the isochronous stream packets oPCR, oMPR, iPCR, and iMPR are registers defined by the IEEE 1394 standard for generating an isochronous channel.

In addition, the IP over IEEE 1394 device driver 322 manages the isochronous stream packet and the general stream packet with different queues with reference to the value of the TOS field of the IPv4 header when the isochronous stream packet generated by the isochronous stream packet generating portion 321 is an IPv4 packet, or with reference to the value of the traffic class field of the IPv6 header when the isochronous stream packet is an IPv6 packet. Also, the IP over IEEE 1394 device driver 322 transmits the isochronous stream packet based on management which will be described in detail with reference to FIG. 6.

Referring to FIG. 6, the isochronous stream packet module 3213 of the IP over IEEE 1394 device driver 322 includes a packet divider 61, a general packet queue 62, and an isochronous stream packet queue 63.

The IP over IEEE 1394 device driver 322 stores the general packet in the general packet queue 62 when the value of the CU field 532 in the TOS field of the IPv4 header or in the traffic class field of the IPv6 header is 00, and stores the isochronous stream packet in the isochronous stream packet queue 63 when the value of the CU field 532 is 01. The packets stored in the general packet queue 62 and the isochronous stream packet queue 63 are stored in an IEEE 1394 transmission queue 64 of the IEEE 1394 device driver 322 according to a scheduling algorithm which is the most suitable for the network environment where the first node 2 and the second node 3 are placed. That is, as shown in FIG. 3, every 125 µsec after a cycle start packet is received, an isochronous stream packet is transmitted through the isochronous channel, and then, the asynchronous stream packets and the asynchronous block write packets are transmitted through the channel arbitration.

The IEEE 1394 layer 33 includes a physical layer 331, a link layer 332, a transaction layer 333, and a bus management layer 334. The transaction layer 333, the link layer 332, the physical layer 331, and the bus management layer 334 correspond to an IEEE 1394 device driver.

The physical layer 331 corresponds to the above-mentioned physical layer 231, the link layer 332 corresponds to the above-mentioned link layer 232, the transaction layer 333 corresponds to the above-mentioned transaction layer 233, and the bus management layer 334 corresponds to the above-mentioned bus management layer 234.

However, the link layer 332 includes an isochronous stream packet displaying portion 3321 instead of the isochronous stream packet detecting portion 2321 of the link layer 232.

As shown in FIGS. 4 and 5, the isochronous stream packet displaying portion 3321 records the value of 10, which indicates the isochronous stream packet, in the tag field 512 of the isochronous header 51 in order to distinguish the isochronous stream packet from the general packet.

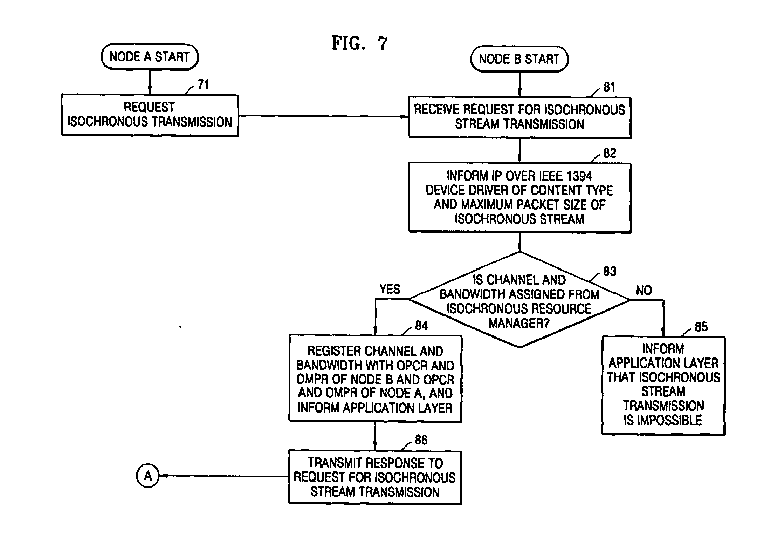

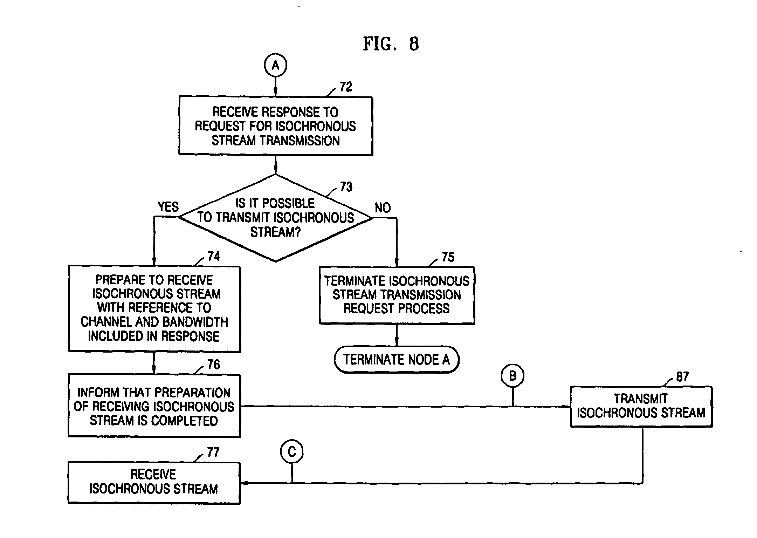

FIGS. 7 and 8 are flowcharts illustrating a method of transmitting and receiving an isochronous stream according to an exemplary embodiment of the present invention.

Referring to FIGS. 7 and 8, the method of transmitting and receiving the isochronous stream includes the following operations. The operations of the method of transmitting and receiving an isochronous stream is processed in the first node 2 (Node A) and the second node 3 (Node B) illustrated in FIG. 2. Accordingly, the above description related to the isochronous stream receiving device mounted on the first node 2 and the isochronous stream transmission device mounted on the second node 3 will be applied to the method of transmitting and receiving an isochronous stream even though the description is omitted below.

In operation 71, the isochronous stream transmission requesting portion 211 of the first node 2 sends a request to the second node 3 to transmit an isochronous stream using an asynchronous block write over the IEEE 1394 bus 4 by calling the asynchronous block write function in the application layer 21.

In operation 81, the isochronous resource obtaining portion 311 of the second node 3 receives the request for the isochronous stream transmission using the asynchronous block write over the IEEE 1394 bus 4.

In operation 82, the isochronous resource obtaining portion 311 of the second node 3 obtains the isochronous resource for transmitting the isochronous stream in response to the request received in operation 81. More specifically, the second node 3 informs the IP over the IEEE 1394 device driver 322 in the IP layer 32 of the content type and the maximum packet size of the isochronous stream by calling the IOCTL in the application layer 31.

In operation 83, the IP over IEEE 1394 device driver 322 of the second node 3 is informed of the content type and the maximum packet size of the isochronous stream through the IOCTL call from the application layer 31. The IP over 1394 IEEE device driver 322 informs the isochronous resource manager in the transaction layer 333 of the content type and the maximum packet size of the isochronous stream, and is assigned the channel and bandwidth by the isochronous resource manager.

In operation 84, when the IP over IEEE 1394 device driver 322 of the second node 3 is assigned the channel and bandwidth in operation 83, the IP over IEEE 1394 device driver 322 registers the assigned channel and bandwidth with the oPCR and oMPR of the second node 3 and with the iPCR of the first node 2 and the iMPR through the asynchronous lock transaction to generate the isochronous channel for transmitting the isochronous stream packets, and informs the application layer 31 of the assigned channel and bandwidth.

In operation 85, when the IP over IEEE 1394 device driver 322 of the second node 3 is not assigned the channel and bandwidth, the IP over IEEE 1394 device driver 322 informs the application layer 31 that the isochronous stream cannot be transmitted.

In operation 86, when the isochronous stream transmission responding portion 312 of the second node 3 is informed of the channel and bandwidth informed by the IP over IEEE 1394 device driver 322 in operation 84, the isochronous stream transmission responding portion 312 transmits the response including information about the channel and bandwidth to the first node 2 using the asynchronous block write over the IEEE 1394 bus 4 by calling the asynchronous block write function in the application layer 31. On the other hand, when the isochronous stream transmission responding portion 312 is informed by the IP over IEEE 1394 device driver 322 that the isochronous stream cannot be transmitted, the isochronous stream transmission responding portion 312 transmits to the first node 2 a response which indicates that the isochronous stream transmission is not possible using the asynchronous block write over the IEEE 1394 bus 4 by calling the asynchronous block write function from the application layer 31.

In operation 72, the isochronous stream receipt preparing portion 212 of the first node 2 receives from the second node 3 the response to the request for the isochronous stream transmission.

In operation 73, when the response received in operation 72 includes the channel and bandwidth for transmitting the isochronous stream, the isochronous stream receipt preparing portion 212 determines that isochronous stream transmission is possible, or determines that isochronous stream transmission is not possible when the response indicates that the isochronous stream transmission is not possible.

In operation 74, when it is determined that the isochronous stream transmission is possible in operation 73, the isochronous stream receipt preparing portion 212 of the first node 2 prepares to receive the isochronous stream with reference to the channel and bandwidth included in the response by calling the IOCTL in the application layer 21.

In operation 75, when it is determined that the isochronous stream transmission is not possible in operation 73, the isochronous stream receipt preparing portion 212 of the first node 2 terminates an isochronous stream transmission request process.
In operation 76, when the isochronous stream receipt preparing portion 212 of the first node 2 completes the preparation for the isochronous stream receipt, the isochronous stream receipt preparing portion 212 informs the second node 3 that the isochronous stream receipt has been prepared using the asynchronous block write over the IEEE 1394 bus 4 by calling the asynchronous block write function in the application layer 21.

In operation 87, when the isochronous stream transmitting portion 313 of the second node 3 is informed of the fact that the isochronous stream receipt has been prepared in operation 76, the isochronous stream transmitting portion 313 transmits the isochronous stream to the first node 2 using the service of IP based on the obtaining result of the isochronous resource obtaining portion 311 over the IEEE 1394 bus 4 by calling the isochronous stream transmission function in the application layer 31.

In operation 77, the isochronous stream receiving portion 213 receives the isochronous stream from the second node 3, which has received the information from the isochronous stream receipt preparing portion 212, by using the service of the IP over the IEEE 1394 bus 4.

The operations 71 through 77 are included in the method of receiving the isochronous stream, and the operations 81 through 87 are included in the method of transmitting the isochronous stream.

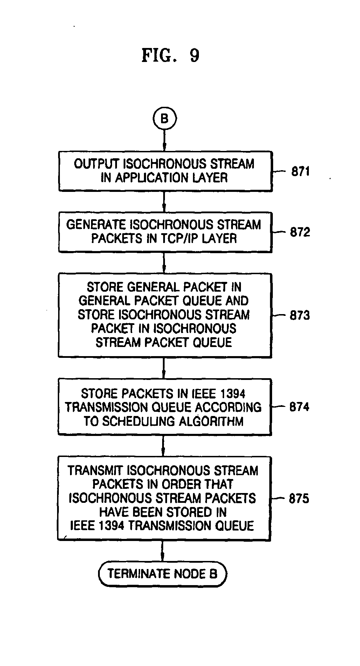

FIG. 9 is a flowchart illustrating in detail operation 87 illustrated FIG. 8.
Referring to FIG. 9, operation 87 includes the following operations.

In operation 871, the isochronous stream transmitting portion 313 of the second node 3 outputs the isochronous stream from the application layer 31 to the TCP/IP layer 32.

In operation 872, the isochronous stream packet generating portion 321 of the second node 3 generates the isochronous stream packets from the isochronous stream output in operation 871. In particular, the isochronous stream packet generating portion 321 of the second node 3 records a predetermined value in the TOS field of the IPv4 header when the isochronous stream packet is an IPv4 packet or records a predetermined value in the traffic class field of the IPv6 header when the isochronous stream packet is an IPv6 packet so that the isochronous stream packet and the general packet are managed with different queues by the IP over the IEEE 1394 device driver 322.

In operation 873, the IP over IEEE 1394 device driver 322 of the second node 3 manages the isochronous stream packet and the general packet with different queues with reference to the value of the TOS field of the IPv4 header when the isochronous stream packet generated in operation 872 is an IPv4 packet or with reference to the value of the traffic class field of the IPv6 packet when the isochronous stream packet is an IPv6 packet. Also, the IP over IEEE 1394 device driver 322 transmits the isochronous stream packet based on the management. More specifically, the IP over IEEE 1394 device driver 322 of the second node 3 stores the general packet in the general packet queue 62 when the value of the CU field 532 of the TOS field in the IPv4 header or the traffic class field in the IPv6 header is 00, and stores the isochronous stream packet in the isochronous stream packet queue 63 when the value of the CU field 532 is 01.

In operation 874, the IEEE 1394 layer 33 of the second node 3 stores the packets which are stored in the general packet queue 62 and the isochronous stream packet queue 63 in operation 873 in an IEEE 1394 transmission queue 64 according to a scheduling algorithm which is the most suitable for the network environment where the first node 2 and the second node 3 are placed.

In operation 875, the IEEE 1394 layer 33 of the second node 3 transmits the isochronous stream packets in the order that they are stored in the IEEE 1394 transmission queue 64 in operation 874. At this moment, the isochronous stream packet displaying portion 3321 of the IEEE 1394 layer 33 records a value of 10 which indicates an isochronous stream packet in the tag field 512 of the isochronous header 51 so that the isochronous stream packet can be distinguished from the general packets.

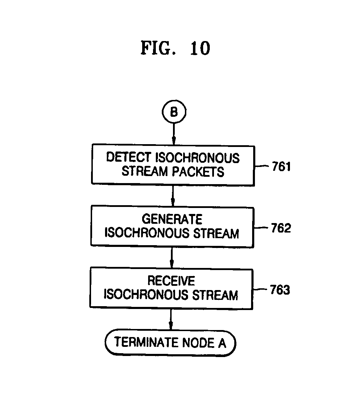

FIG. 10 is a flowchart illustrating in detail operation 76 illustrated in FIG. 8.

Referring to FIG. 10, operation 76 includes the following operations.

In operation 761, the isochronous stream packet detecting portion 2321 of the first node 2 detects the isochronous stream packets from the packets input from the physical layer 231 with reference to the value of the tag field 512 of the isochronous header 51, and outputs the detected isochronous stream packets to the isochronous stream packet module 2213 of the IP over IEEE 1394 device driver 222.

In operation 762, the isochronous stream extracting portion 221 of the first node 2 extracts the isochronous stream from the isochronous stream packets output from the isochronous stream packet module 2213 which received the isochronous stream packets in operation 761. More specifically, the isochronous stream extracting portion 221 of the first node 2 removes headers from the isochronous stream packets and collects data recorded in payloads of the isochronous stream packets to generate the isochronous stream, and outputs the generated isochronous stream to the isochronous stream receiving portion 213 of the application layer 21.

In operation 763, the isochronous stream receiving portion 213 of the first node 2 receives the isochronous stream which was output in operation 762.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

According to the present invention, by allowing an IP over IEEE 1394 to support isochronous stream transmission, an isochronous stream can be efficiently and securely transmitted using an IP service. That is, isochronous stream packets can be transmitted with a QOS that is guaranteed through an optimized path. As a result, the quality of the real-time transmission of multimedia contents, for example, voice over IP (VoIP), image communications and a streaming service between IT devices and electric home appliances can be enhanced.

In particular, the present invention is more useful for IP over IEEE 1394-based isochronous stream transmission when time division type isochronous Ethernet according to an the IEEE 802.9 committee standard is supported. Further, according to the present invention, both isochronous stream transmission and asynchronous stream transmission can be supported in a single application, and isochronous stream packets can be more rapidly transmitted by managing the isochronous stream packets with different queues.

Although a few preferred embodiments have been shown and described, it will be appreciated by those skilled in the art that various changes and modifications might be made without departing from the scope of the invention, as defined in the appended claims.

## Claims

1. A method of receiving an isochronous stream, the method comprising:
requesting isochronous stream transmission over a predetermined serial bus (4); and
receiving an isochronous stream through the predetermined serial bus (4) using a service of a predetermined network protocol based on a response to the request;
**characterised in that** the received isochronous stream has been transmitted after an isochronous resource has been obtained, said obtaining comprising:
informing a layer at a predetermined network protocol level of a content type and maximum packet size of the isochronous stream which corresponds to the isochronous resource; and
being informed of a channel and bandwidth which corresponds to the isochronous resource as a response to the informing.

2. The method of claim 1, wherein the requesting the isochronous stream transmission requests the isochronous stream transmission using an asynchronous block write in an application layer (21).

3. The method of claim 1 or claim 2, further comprising:
preparing to receive the isochronous stream based on a channel and bandwidth included in the response and then indicating that preparation is completed using an asynchronous stream write.

4. The method of any one of claims 1 to 3, wherein the predetermined serial bus (4) is an IEEE 1394 bus, and the predetermined network protocol is an Internet protocol, IP.

5. The method of claim 4, further comprising:
detecting isochronous stream packets from packets received from a node (2) with reference to a value of a tag field of an isochronous stream packet which is generated from the isochronous stream in an IEEE 1394 layer.

6. An apparatus for receiving an isochronous stream, the apparatus comprising:
a requesting portion (211) which is operable to request isochronous stream transmission over a predetermined serial bus (4); and
a receiving portion (213) which is operable to receive an isochronous stream over the predetermined serial bus (4) using a service of a predetermined network protocol based on a response to the request by the requesting portion (211),
**characterised in that** the receiving portion is operable to receive the isochronous stream having a resource obtaining portion operable to:
inform a layer at a predetermined network protocol level of a content type and maximum packet size of the isochronous stream which corresponds to the isochronous resource; and
be informed of a channel and bandwidth which corresponds to the isochronous resource as a response to the informing.

7. The apparatus according claim 6, wherein the predetermined serial bus (4) is an IEEE 1394 bus and the predetermined network protocol is an Internet protocol, IP.

8. A computer readable recording medium having embodied thereon a computer program for executing a method of receiving an isochronous stream, the method comprising:
requesting isochronous stream transmission over a predetermined serial bus (4); and
receiving an isochronous stream through the predetermined serial bus (4) using a service of a predetermined network protocol based on a response to the request,
**characterised in that** the received isochronous stream has been transmitted after an isochronous resource has been obtained, said obtaining comprising:
informing a layer at a predetermined network protocol level of a content type and maximum packet size of the isochronous stream which corresponds to the isochronous resource; and
being informed of a channel and bandwidth which corresponds to the isochronous resource as a response to the informing.

9. A method of transmitting an isochronous stream, the method comprising:
obtaining an isochronous resource to generate an obtained result of the isochronous source for transmitting the isochronous stream when a request for isochronous stream transmission is received over a predetermined serial bus (4); and
transmitting the isochronous stream over the predetermined serial bus (4) using a service of a predetermined network protocol based on the obtained result,
**characterised in that** obtaining the isochronous resource further comprises:
informing a layer at a predetermined network protocol level of a content type and maximum packet size of the isochronous stream which corresponds to the isochronous resource; and
being informed of a channel and bandwidth which corresponds to the isochronous resource as a response to the informing.

10. The method of claim 9, further comprising:
transmitting a response comprising the obtained result to a node (2) which has requested the isochronous stream transmission using an asynchronous block write in an application layer (21).

11. The method of claim 9 or 10, wherein the predetermined serial bus (4) is an IEEE 1394 bus and the predetermined network protocol is an Internet protocol, IP.

12. The method of claim 11, wherein the transmitting the isochronous stream further comprises,
transmitting the isochronous stream by calling a predetermined function from an application layer (21) and generating isochronous stream packets from the isochronous stream in an IP layer (22) in accordance with the calling of the predetermined function.

13. The method of claim 12, further comprising:
managing an isochronous stream packet of the generated isochronous stream packets and a general packet with different queues with reference to a value of a type of service (TOS) field of an Ipv4 header or a traffic class field of an Ipv6 header; and
transmitting the isochronous stream packet based on the managing.

14. An apparatus for transmitting an isochronous stream, the apparatus comprising:
an isochronous resource obtaining portion which is operable to obtain an isochronous resource and to generate an obtained result of the isochronous resource for transmitting the isochronous stream when a request for isochronous stream transmission is received over a predetermined serial bus (4); and
a transmitting portion which is operable to transmit the isochronous stream over the predetermined serial bus (4) using a service of a predetermined network protocol based on the obtained result,
**characterised in that** the isochronous resource obtaining portion is operable to:
inform a layer at a predetermined network protocol level of a content type and maximum packet size of the isochronous stream which corresponds to the isochronous resource; and
be informed of a channel and bandwidth which corresponds to the isochronous resource as a response to the informing.

15. A computer readable recording medium having embodied thereon a computer program for executing a method of transmitting an isochronous stream, the method comprising:
obtaining an isochronous resource to generate an obtained result of the isochronous resource for transmitting the isochronous stream when a request for isochronous stream transmission is received over a predetermined serial bus (4); and
transmitting the isochronous stream over the predetermined serial bus (4) using a service of a predetermined network protocol based on the obtained result;
**characterised in that** obtaining the isochronous resource further comprises:
informing a layer at a predetermined network protocol level of a content type and maximum packet size of the isochronous stream which corresponds to the isochronous resource; and
being informed of a channel and bandwidth which corresponds to the isochronous resource as a response to the informing.

16. A method of transmitting and receiving an isochronous stream, the method comprising:
requesting isochronous stream transmission over a predetermined serial bus (4);
obtaining an isochronous resource to generate an obtained result of the isochronous resource for transmitting the isochronous stream when the request is received;
transmitting the isochronous stream over the predetermined serial bus (4) using a service of a predetermined network protocol based on the obtained result; and
receiving the transmitted isochronous stream;
**characterised in that** obtaining the isochronous resource further comprises:
informing a layer at a predetermined network protocol level of a content type and maximum packet size of the isochronous stream which corresponds to the isochronous resource; and
being informed of a channel and bandwidth which corresponds to the isochronous resource as a response to the informing.

17. The method of claim 16, wherein the requesting the isochronous stream transmission further comprises, requesting the isochronous stream transmission using an asynchronous block write in an application layer (21).

18. The method of claim 16 or claim 17, further comprising:
transmitting a response comprising the obtained result using an asynchronous write in an application layer (21),
wherein the receiving the transmitted isochronous stream receives the isochronous stream based on the transmitted response.

19. A computer readable recording medium having embodied thereon a computer program for executing a method of transmitting and receiving an isochronous stream, the method comprising:
requesting isochronous stream transmission over a predetermined serial bus (4);
obtaining an isochronous resource to generate an obtained result of the isochronous resource for transmitting the isochronous stream when the request is received;
transmitting the isochronous stream over the predetermined serial bus (4) using a service of a predetermined network protocol based on the obtained result; and
receiving the transmitted isochronous stream ;
**characterised in that** obtaining the isochronous resource further comprises:
informing a layer at a predetermined network protocol level of a content type and maximum packet size of the isochronous stream which corresponds to the isochronous resource; and
being informed of a channel and bandwidth which corresponds to the isochronous resource as a response to the informing.

## Patentansprüche

1. Verfahren zum Empfangen eines isochronen Datenstroms, das umfasst:
Anfordern der Übermittlung eines isochronen Datenstroms über einen vorgegebenen seriellen Bus (4); und
Empfangen eines isochronen Datenstroms über den vorgegebenen seriellen Bus (4), indem ein Dienst eines vorgegebenen Netzwerkprotokolls auf der Basis einer Anforderungsrückmeldung benutzt wird;
**dadurch gekennzeichnet, dass**
der empfangene isochrone Datenstrom empfangen wird, nachdem eine isochrone Ressource beschafft wurde, wobei das Beschaffen umfasst:
Informieren einer Schicht auf einer vorgegebenen Netzwerkprotokoll-Ebene über die Art des Inhalts und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

2. Verfahren nach Anspruch 1, wobei das Anfordern der Übermittlung des isochronen Datenstroms von der Übermittlung des isochronen Datenstroms verlangt, eine Eintragung eines asynchronen Blocks in eine Anwendungsschicht (21) zu verwenden:

3. Verfahren nach Anspruch 1 oder 2, das ferner umfasst:
Vorbereiten zum Empfangen des isochronen Datenstroms basierend auf einem Kanal und einer Bandbreite, die in der Rückmeldung enthalten sind, und anschließendem Anzeigen des Abschlusses der Vorbereitung mittels einer Eintragung eines asynchronen Datenstroms.

4. Verfahren nach einem der Ansprüche 1 bis 3, wobei der vorgegebene serielle Bus (4) ein Bus nach IEEE 1394 und des vorgegebene Netzwerkprotokoll ein Internetprotokoll, lP, ist.

5. Verfahren nach Anspruch 4, das des Weiteren umfasst:
Erkennen isochroner Datenstrom-Pakete aus von einem Knoten (2) empfangenen Paketen mit Bezug zu einem Wert eines Markierungsfeldes eines isochronen Datenstrom-Pakets, das von dem isochronen Datenstrom in einer IEEE-1394-Schicht erzeugt wird.

6. Gerät zum Empfangen eines isochronen Datenstroms, das umfasst:
ein Anforderungsteil (211), das in der Lage ist, über einen vorgegebenen seriellen Bus (4) eine Übermittlung eines isochronen Datenstroms anzufordern; und
ein Empfangsteil (213), das in der Lage ist, über einen vorgegebenen serielle Bus (4) einen isochronen Datenstrom zu empfangen, indem ein Dienst eines vorgegebene Netzwerkprotokolls verwendet wird, basierend auf einer Rückmeldung auf die Anforderung durch das Anforderungsteil (211),
**dadurch gekennzeichnet, dass**
das Empfangsteil in der Lage ist, den isochronen Datenstrom zu empfangen, der ein Ressourcenbeschaffungsteil aufweist, das folgende Funktionen ausführen kann:
Informieren einer Schicht auf einer vorgegebenen Netzwerkprotokoll-Ebene über die Art des Inhaltes und die maximale Paketgröße des isochronen Datenstroms , der der isochronen Ressource entspricht; und
Informiert werden über einen Kanal und eine Bandbreite entsprechend der isochronen Ressource als eine Rückmeldung auf das Informieren.

7. Gerät nach Anspruch 6, wobei der vorgegebene serielle Bus (4) ein Bus nach IEEE 1394 und des vorgegebene Netzwerkprotokoll ein Internetprotokoll, IP, ist.

8. Computerlesbares Aufzeichnungsmedium, auf dem ein Computerprogramm zum Ausführen eines Verfahrens zum Empfangen eines isochronen Datenstroms enthalten ist, welches umfasst:
Anfordern einer Übermittlung eines isochronen Datenstroms über einen vorgegebenen seriellen Bus (4); und
Empfangen eines isochronen Datenstroms über den vorgegebenen seriellen Bus (4), indem ein Dienst eines vorgegebenen Netzwerkprotokolls auf der Basis einer Anforderungsrückmeldung benutzt wird,
**dadurch gekennzeichnet, dass**
der empfangene isochrone Datenstrom empfangen wird, nachdem eine isochrone Ressource beschafft wurde, wobei das Beschaffen umfasst:
Informieren einer Schicht auf einer vorgegebenen Netzwerkprotokoll-Ebene über die Art des Inhalts und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

9. Verfahren zum Senden eines isochronen Datenstroms, das umfasst:
Beschaffen einer isochronen Ressource zum Erzeugen eines erzielten Ergebnisses der isochronen Ressource zum Senden des isochronen Datenstroms, wenn eine Übermittlungsanforderung für einen isochronen Datenstrom über einen vorgegebenen seriellen Datenbus (4) empfangen wird; und
Senden des isochronen Datenstroms über den vorgegebenen seriellen Bus (4), indem ein Dienst eines vorgegebenen Netzwerkprotokolls auf der Basis des erzielten Ergebnisses verwendet wird;
**dadurch gekennzeichnet, dass** das Beschaffen der isochronen Ressource des Weiteren umfasst:
Informieren einer Schicht auf einer vorgegebenen Netzwerkprotokoll-Ebene über die Art des Inhalts und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

10. Verfahren nach Anspruch 9, das des Weiteren umfasst:
Senden einer das erzielte Ergebnis umfassenden Rückmeldung zu einem Knoten (2), der die Übermittlung des isochronen Datenstroms angefordert hat, indem die Eintragung eines asynchronen Blocks in eine Anwendungsschicht (21) verwendet wurde.

11. Verfahren nach Anspruch 9 oder 10, wobei der vorgegebene serielle Bus (4) ein Bus nach IEEE 1394 und des vorgegebene Netzwerkprotokoll ein Internetprotokoll, IP, ist.

12. Verfahren nach Anspruch 11, wobei das Senden des isochronen Datenstroms ferner umfasst:
Senden des isochronen Datenstroms durch Aufrufen einer vorgegebenen Funktion von einer Anwendungsschicht (21) und Erzeugen isochroner Datenstrompakete aus dem isochronen Datenstrom in einer IP-Schicht (22) in Einklang mit dem Aufrufen der vorgegebenen Funktion.

13. Verfahren nach Anspruch 12, das des Weiteren umfasst:
Verwalten eines isochronen Datenstrompakets aus den erzeugten isochronen Datenstrompaketen und eines Rahmenpaketes mit verschiedenen Warteschlangen in Bezug auf einen Wert eines Feldes der Art des Dienstes (TOS - type of service) eines Ipv4-Headers oder eines Feldes der Dienstgüteklasse eines Ipv6-Headers; und
Senden des isochronen Datenstrompakets auf der Basis der Verwaltung.

14. Gerät zum Senden eines isochronen Datenstroms, das umfasst:
ein Beschaffungsteil für eine isochrone Ressource, das in der Lage ist, eine isochrone Ressource zu beschaffen und ein erzieltes Ergebnis der isochronen Ressource zum Senden des isochronen Datenstroms zu erzeugen, wenn eine Übermittlungsanforderung für einen isochronen Datenstrom über einen vorgegebenen seriellen Bus (4) angefordert wird; und
ein Sendeteil, das in der Lage ist, über einen vorgegebenen serielle Bus (4) den isochronen Datenstrom zu senden, indem ein Dienst eines vorgegebene Netzwerkprotokolls auf der Basis des erzielten Ergebnisses verwendet wird;
**dadurch gekennzeichnet, dass** der Beschaffungsteil für eine isochrone Ressource folgende Funktionen ausführen kann:
Informieren einer Schicht auf einer vorgegebenen Netzwerkprotokoll-Ebene über die Art des Inhaltes und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

15. Computerlesbares Aufzeichnungsmedium, auf dem ein Computerprogramm zum Ausführen eines Verfahrens zum Senden eines isochronen Datenstroms enthalten ist, welches umfasst:
Beschaffen einer isochronen Ressource zum Erzeugen eines erzielten Ergebnisses der isochronen Ressource zum Senden des isochronen Datenstroms, wenn eine Übermittlungsanforderung für einen isochronen Datenstrom über einen vorgegebenen seriellen Bus (4) empfangen wird; und
Senden des isochronen Datenstroms über den vorgegebenen seriellen Bus (4), indem ein Dienst eines vorgegebenen Netzwerkprotokolls auf der Basis des erzielten Ergebnisses benutzt wird;
**dadurch gekennzeichnet, dass** das Beschaffen der isochronen Ressource des Weiteren umfasst:
Informieren einer Schicht auf einer vorgegebenen Netzwerkprotokoll-Ebene über die Art des Inhalts und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

16. Verfahren zum Senden und Empfangen eines isochronen Datenstroms, das umfasst:
Anfordern einer Übermittlung eines isochronen Datenstroms über einen vorgegebenen seriellen Bus (4);
Beschaffen einer isochronen Ressource zum Erzeugen eines erzielten Ergebnisses der isochronen Ressource zum Senden des isochronen Datenstroms, wenn die Anforderung empfangen wird;
Senden des isochronen Datenstroms über den vorgegebenen seriellen Bus (4), indem ein Dienst eines vorgegebenen Netzwerkprotokolls auf der Basis des erzielten Ergebnisses verwendet wird; und
Empfangen des gesendeten isochronen Datenstroms;
**dadurch gekennzeichnet, dass** das Beschaffen der isochronen Ressource des Weiteren umfasst:
Informieren einer Schicht auf einer vorgegebenen Netzwerkprotokoll-Ebene über die Art des Inhalts und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

17. Verfahren nach Anspruch 16, wobei das Anfordern der Übermittlung des isochronen Datenstroms ferner umfasst, dass das Anfordern der Übermittlung des isochronen Datenstroms eine Eintragung eines asynchronen Blocks in eine Anwendungsschicht (21) verwendet.

18. Verfahren nach Anspruch 16 oder 17, das des Weiteren umfasst:
Senden einer Rückmeldung mit dem erzielten Ergebnis, indem eine asynchrone Eintragung in eine Anwendungsschicht (21) verwendet wird,
wobei beim Empfangen des gesendeten isochronen Datenstroms der isochrone Datenstrom auf Basis der gesendeten Rückmeldung empfangen wird.

19. Computerlesbares Aufzeichnungsmedium, auf dem ein Computerprogramm zum Ausführen eines Verfahrens zum Senden und Empfangen eines isochronen Datenstroms enthalten ist, welches umfasst:
Anfordern einer Übermittlung eines isochronen Datenstroms über einen vorgegebenen seriellen Bus (4);
Beschaffen einer isochronen Ressource zum Erzeugen eines erzielten Ergebnisses der isochronen Ressource zum Senden des isochronen Datenstroms, wenn die Anforderung empfangen wird;
Senden des isochronen Datenstroms über den vorgegebenen seriellen Bus (4), indem ein Dienst eines vorgegebenen Netzwerkprotokolls auf der Basis des erzielten Ergebnisses benutzt wird; und
Empfangen des gesendeten isochronen Datenstroms;
**dadurch gekennzeichnet, dass** das Beschaffen der isochronen Ressource des Weiteren umfasst:
Informieren einer Schicht auf einer vorgegebenen Netzwerkprotokoll-Ebene über die Art des Inhalts und die maximale Paketgröße des isochronen Datenstroms, der der isochronen Ressource entspricht; und
Informiert werden über einen Kanal und eine Bandbreite entsprechend der isochronen Ressource als eine Rückmeldung auf das Informieren.

## Revendications

1. Procédé de réception d'un flux isochrone, le procédé comportant les étapes consistant :
demander une transmission de flux isochrone sur un bus série prédéterminé (4), et
recevoir un flux isochrone via le bus série prédéterminé (4) en utilisant un service d'un protocole réseau prédéterminé sur la base d'une réponse à la demande,
**caractérisé en ce que** le flux isochrone reçu a été transmis une fois qu'une ressource isochrone a été obtenue, ladite obtention comportant :
le renseignement d'une couche à un niveau de protocole réseau prédéterminé quant à un type de contenu et une taille de paquet maximale du flux isochrone qui correspond à la ressource isochrone, et
d'être renseigné sur un canal et une largeur de bande qui correspond à la ressource isochrone en réponse au renseignement.

2. Procédé selon la revendication 1, dans lequel la demande de la transmission de flux isochrone demande la transmission de flux isochrone en utilisant une écriture de bloc asynchrone dans une couche application (21).

3. Procédé selon la revendication 1 ou la revendication 2, comportant de plus :
la préparation pour recevoir le flux isochrone sur la base d'un canal et d'une largeur de bande inclus dans la réponse et ensuite l'indication que la préparation est terminée en utilisant une écriture de flux asynchrone.

4. Procédé selon l'une quelconque des revendications 1 à 3, dans lequel le bus série prédéterminé (4) est un bus IEEE 1394, et le protocole réseau prédéterminé est un protocole Internet, IP.

5. Procédé selon la revendication 4, comportant de plus :
la détection de paquets de flux isochrone parmi des paquets reçus depuis un noeud (2) en faisant référence à une valeur d'un champ d'étiquette d'un paquet de flux isochrone qui est généré à partir du flux isochrone dans une couche IEEE 1394.

6. Dispositif de réception d'un flux isochrone, le dispositif comportant :
une partie de demande (211) qui est opérationnelle pour demander une transmission de flux isochrone sur un bus série prédéterminé (4), et
une partie de réception (213) qui est opérationnelle pour recevoir un flux isochrone sur le bus série prédéterminé (4) en utilisant un service d'un protocole réseau prédéterminé sur la base d'une réponse à la demande par la partie de demande (211),
**caractérisé en ce que** la partie de réception est opérationnelle pour recevoir le flux isochrone ayant une partie d'obtention de ressource opérationnelle pour :
renseigner une couche à un niveau de protocole réseau prédéterminé quant à un type de contenu et une taille de paquet maximale du flux isochrone qui correspond à la ressource isochrone, et
d'être renseigné sur un canal et une largeur de bande qui correspond à la ressource isochrone en tant que réponse au renseignement.

7. Dispositif selon la revendication 6, dans lequel le bus série prédéterminé (4) est un bus IEEE 1394 et le protocole réseau prédéterminé est un protocole Internet, IP.

8. Support d'enregistrement lisible par ordinateur sur lequel est mis en oeuvre un programme informatique pour exécuter un procédé de réception d'un flux isochrone, le procédé comportant les étapes consistant à :
demander une transmission de flux isochrone sur un bus série prédéterminé (4), et
recevoir un flux isochrone via le bus série prédéterminé (4) en utilisant un service d'un protocole réseau prédéterminé sur la base d'une réponse à la demande,
**caractérisé en ce que** le flux isochrone reçu a été transmis une fois qu'une ressource isochrone a été obtenue, ladite obtention comportant :
le renseignement d'une couche à un niveau de protocole réseau prédéterminé quant à un type de contenu et une taille de paquet maximale du flux isochrone qui correspond à la ressource isochrone, et
d'être renseigné sur un canal et une largeur de bande qui correspond à la ressource isochrone en réponse au renseignement.

9. Procédé de transmission d'un flux isochrone, le procédé comportant les étapes consistant à :
obtenir une ressource isochrone pour générer un résultat obtenu de la source isochrone pour transmettre le flux isochrone lorsqu'une demande de transmission de flux isochrone est reçue sur un bus série prédéterminé (4), et
transmettre le flux isochrone sur le bus série prédéterminé (4) en utilisant un service d'un protocole réseau prédéterminé sur la base du résultat obtenu,
**caractérisé en ce que** l'obtention de la ressource isochrone comporte de plus :
le renseignement d'une couche à un niveau de protocole réseau prédéterminé quant à un type de contenu et une taille de paquet maximale du flux isochrone qui correspond à la ressource isochrone,
d'être renseigné sur un canal et une largeur de bande qui correspond à la ressource isochrone en tant que réponse au renseignement.

10. Procédé selon la revendication 9, comportant de plus :
la transmission d'une réponse comportant le résultat obtenu à un noeud (2) qui a demandé la transmission de flux isochrone en utilisant une écriture de bloc asynchrone dans une couche application (21).

11. Procédé selon la revendication 9 ou 10, dans lequel le bus série prédéterminé (4) est un bus IEEE 1394 et le protocole réseau prédéterminé est un protocole Internet, IP.

12. Procédé selon la revendication 11, dans lequel la transmission du flux isochrone comporte de plus :
la transmission du flux isochrone en appelant une fonction prédéterminée à partir d'une couche application (21) et en générant des paquets de flux isochrone à partir du flux isochrone dans une couche IP (22) conformément à l'appel de la fonction prédéterminée.

13. Procédé selon la revendication 12, comportant de plus les étapes consistant à :
gérer un paquet de flux isochrone parmi les paquets de flux isochrone générés et un paquet général à l'aide de différentes files d'attente en faisant référence à une valeur d'un type de champ de service (TOS) d'un en-tête Ipv4 ou d'un champ de classe de trafic d'un en-tête Ipv6, et
transmettre le paquet de flux isochrone sur la base de la gestion.

14. Dispositif pour transmettre un flux isochrone, le dispositif comportant :
une partie d'obtention de ressource isochrone qui est opérationnelle pour obtenir une ressource isochrone et pour générer un résultat obtenu de la ressource isochrone pour transmettre le flux isochrone lorsqu'une demande de transmission de flux isochrone est reçue sur un bus série prédéterminé (4), et
une partie de transmission qui est opérationnelle pour transmettre le flux isochrone sur le bus série prédéterminé (4) en utilisant un service d'un protocole réseau prédéterminé sur la base du résultat obtenu,
**caractérisé en ce que** la partie d'obtention de ressource isochrone est opérationnelle pour :
renseigner une couche à un niveau de protocole réseau prédéterminé sur un type de contenu et une taille de paquet maximale du flux isochrone qui correspond à la ressource isochrone, et
être renseigné sur un canal et une largeur de bande qui correspond à la ressource isochrone en tant que réponse au renseignement.

15. Support d'enregistrement lisible par ordinateur sur lequel est mis en oeuvre un programme informatique pour exécuter un procédé de transmission d'un flux isochrone, le procédé comportant les étapes consistant à :
obtenir une ressource isochrone pour générer un résultat obtenu de la ressource isochrone pour transmettre le flux isochrone lorsqu'une demande de transmission de flux isochrone est reçue sur un bus série prédéterminé (4), et
transmettre le flux isochrone sur le bus série prédéterminé (4) en utilisant un service d'un protocole réseau prédéterminé sur la base du résultat obtenu,
**caractérisé en ce que** l'obtention de la ressource isochrone comporte de plus :
le renseignement d'une couche à un niveau de protocole réseau prédéterminé quant à un type de contenu et une taille de paquet maximale du flux isochrone qui correspond à la ressource isochrone, et
d'être renseigné sur un canal et une largeur de bande qui correspond à la ressource isochrone en tant que réponse au renseignement.

16. Procédé de transmission et de réception d'un flux isochrone, le procédé comportant les étapes consistant à :
demander une transmission de flux isochrone sur un bus série prédéterminé (4),
obtenir une ressource isochrone pour générer un résultat obtenu de la ressource isochrone pour transmettre le flux isochrone lorsque la demande est reçue,
transmettre le flux isochrone sur le bus série prédéterminé (4) en utilisant un service d'un protocole réseau prédéterminé sur la base du résultat obtenu, et
recevoir le flux isochrone transmis,
**caractérisé en ce que** l'obtention de la ressource isochrone comporte de plus :
le renseignement d'une couche à un niveau de protocole réseau prédéterminé quant à un type de contenu et une taille de paquet maximale du flux isochrone qui correspond à la ressource isochrone,
d'être renseigné sur un canal et une largeur de bande qui correspond à la ressource isochrone en tant que réponse au renseignement.

17. Procédé selon la revendication 16, dans lequel la demande de la transmission de flux isochrone comporte de plus la demande de la transmission de flux isochrone en utilisant une écriture de bloc asynchrone dans une couche application (21).

18. Procédé selon la revendication 16 ou 17, comportant de plus :
la transmission d'une réponse comportant le résultat obtenu en utilisant une écriture asynchrone dans une couche application (21),
dans lequel la réception du flux isochrone transmis reçoit le flux isochrone sur la base de la réponse transmise.

19. Support d'enregistrement lisible par ordinateur sur lequel est mis en oeuvre un programme informatique pour exécuter un procédé de transmission et de réception d'un flux isochrone, le procédé comportant les étapes consistant à :
demander une transmission de flux isochrone sur un bus série prédéterminé (4),
obtenir une ressource isochrone pour générer un résultat obtenu de la ressource isochrone pour transmettre le flux isochrone lorsque la demande est reçue,
transmettre le flux isochrone sur le bus série prédéterminé (4) en utilisant un service d'un protocole réseau prédéterminé sur la base du résultat obtenu, et
recevoir le flux isochrone transmis,
**caractérisé en ce que** l'obtention de la ressource isochrone comporte de plus :
le renseignement d'une couche à un niveau de protocole réseau prédéterminé quant à un type de contenu et une taille de paquet maximale du flux isochrone qui correspond à la ressource isochrone, et
d'être renseigné sur un canal et une largeur de bande qui correspond à la ressource isochrone en tant que réponse au renseignement.
